# EUROPÄISCHE PATENTSCHRIFT

(11) **EP 2 444 473 B1**
(45) Veröffentlichungstag und Bekanntmachung des Hinweises auf die Patenterteilung: **13.07.2016**
(21) Anmeldenummer: 10013941.9
(22) Anmeldetag: 25.10.2010
(51) Int. Cl.: C08G 63/20, C08G 63/87, C10M 105/42, C10M 107/32, C10N 20/02, C10N 30/06, C10N 30/08, C10N 40/04

(54) **Mehrdimensionaler Polyester, seine Herstellung und seine Verwendung als Basisöl für Schmierstoffe**
Multi-dimensional polyester, production of same and use of same as base oil for lubricants
Polyester à plusieurs dimensions, sa fabrication et son utilisation comme huile de base pour lubrifiants

(43) Veröffentlichungstag der Anmeldung: 25.04.2012
(73) Patentinhaber: DAKO AG, 97353 Wiesentheid (DE)
(72) Erfinder: Däfler, Peter, 97353 Wiesentheid (DE); Walden, Nicholas, 97072 Würzburg (DE); Eitel, Gunter, 97340 Gnodstadt (DE)
(74) Vertreter: Grünecker Patent- und Rechtsanwälte PartG mbB

(56) Entgegenhaltungen:
- WO-A1-99/16849
- WO-A1-2005/019395
- US-A- 4 113 642

## Beschreibung

Die vorliegende Erfindung betrifft einen mehrdimensionalen Polyester, seine Herstellung und seine Verwendung als Basisöl für Schmierstoffe.

Schmierstoffe dienen zur Verringerung von Reibung und Verschleiß zwischen zwei Oberflächen, die sich relativ zueinander bewegen. Weiterhin werden sie zur besseren Kraftübertragung, Kühlung und Schwingungsdämpfung sowie als Dichtungsmittel und Korrosionsschutzmittel eingesetzt. Ein wichtiger physikalischer Kennwert von Schmierstoffen ist unter anderem die Viskosität. Für den Einsatz von Schmierstoffen als Getriebeöle und Hydrauliköle sind Viskositäten von mindestens 200 mm²/s bei 40°C erforderlich, vorzugsweise Viskositäten von 300 mm²/s bei 40 °C.

Diese hohen Viskositätswerte erreichen bislang im Wesentlichen Schmierstoffe auf Basis von Poly-alpha-olefinen. W.J.Bartz beschreibt in "Tribologie und Schmierungstechnik" vom 06/2007 54. Jahrgang Seite 45 über Polyalfaolefine in Windkraftanlagen, dass die Anforderungen an Getriebeöle nur durch synthetische Getriebeöle, z.B. basierend auf Poly-alpha-olefinen, erfüllt werden können. Poly-alpha-olefine sind durch Polymerisation von 1-Alkenen zugänglich, wobei die Kettenlänge der eingesetzten 1-Alkene sich in den Seitenketten des Poly-alpha-olefins wiederfindet und maßgeblich für dessen Viskositätseigenschaften ist. Ein Nachteil dieser Systeme besteht allerdings darin, dass sie nicht aus nachwachsenden Rohstoffen zugänglich sind und nicht biologisch abbaubar sind.

Schmierstoffe auf Esterbasis zeichnen sich zwar durch ihre gute biologische Abbaubarkeit und ihre gute Umweltverträglichkeit aus, aber ihr Viskositätsbereich liegt in der Regel bei nur 20 bis 70 mm²/s bei 40°C. Die Zugabe von sehr hochviskosen, auf einem anderem Weg hergestellten Esterölen, kann das Problem der niedrigen Viskosität nicht nachhaltig beheben, weil durch die Scherbelastung des Schmierstoffgemisches zwischen Oberflächen, die sich relativ zueinander bewegen, eine Trennung der Ölgemische auftreten kann.

Eine Weiterentwicklung im Hinblick auf höhere Viskositätswerte stellen deshalb Schmierstoffe auf Basis von Komplexestern bzw. mehrdimensionalen Polyestern dar. Als Nachteile dieser bisher bekannten und marktüblichen Systeme sind allerdings ihre schlechte Kältestabilität und ihre Neigung zur Verharzung und die dadurch beeinträchtigte Schmierwirkung bei Langzeitanwendungen zu nennen.

In der DE-A-2620645 wird ein Verfahren zur Schmierung eines Zweitaktmotors beschrieben, wobei ein Zweitakt-Schmieröl verwendet wird, welches aus einem Kohlenwasserstofföl und einem Komplexester besteht. Dieser Komplexester wird durch Umsetzung von Trimethylolpropan mit mindestens einer gesättigten, linearen oder wenig verzweigten aliphatischen C₄-C₃₆-Dicarbonsäure und einer gesättigten, linearen oder wenig verzweigten aliphatischen C₁₅-C₃₀-Monocarbonsäure erhalten. Die maximale kinematische Viskosität bei 98,9°C des Komplexesters beträgt 25mm²/s und entspricht damit der geforderten Viskosität von Zweitaktölen.

In der DE-A-2130850 wird eine Schmiermittelzusammensetzung beschrieben, welche aus einer niedrigviskosen und einer hochviskosen Komponente besteht, wobei die hochviskose Komponente ein Komplexester mit einer kinematischen Viskosität bei 99°C von über 50mm²/s und einem flachen Viskositäts-Temperatur-Verhalten darstellt. Die Herstellung dieser Komplexester erfolgt durch Veresterung unverzweigter Dicarbonsäuren mit mindestens 10 Kohlenstoffatomen mit drei- bis vierwertiger Alkoholen wie Trimethylolpropan oder Pentaerythtrit und durch Kettenabbruch durch lineare, niedermolekulare Monoalkohole wie n-Butanol oder n-Hexanol.

In der DE-A-69816843 wird von Komplexestern berichtet, welche durch die Veresterung zwischen mindestens einem gehindertem oder nichtgehindertem aliphatischen polyfunktionellen Alkohol, mindestens einer polyfunktionellen C₉-C₁₈-Carbonsäure und Dimer- und/oder Trimerfettsäuren und einem Kettenabbruchmittel erhalten werden. In Bezug auf den Kettenabbruch durch lineare, niedermolekulare Monoalkohole oder Monocarbonsäuren wird erwähnt, dass durch die Verwendung relativ langer gerader oder verzweigter, gesättigter oder ungesättigter monofunktioneller Alkohole mit wenigstens 14 Kohlenstoffatomen, linearer gesättigter Säuren mit 7 bis 22 Kohlenstoffatomen, verzweigter gesättigter Säuren mit 7 bis 24 Kohlenstoffatomen, gerader oder verzweigter ungesättigter Säuren mit 16 bis 24 Kohlenstoffatomen und Mischungen aus diesen ein aliphatischer Komplexester mit verbesserten Eigenschaften erhalten werden kann. Die Verwendung der Monoalkohole bzw. -säuren dient in erster Linie zur Verringerung der Säure- bzw. der OH-Zahl der Ester oder um die Reaktion zu beenden.

In der DE-A-102006027602 wird eine Schmierstoffzusammensetzung beschrieben, welche eine gute Scherstabilität, bestimmt durch den Verlust der kinematischen Viskosität bei 100°C, aufweist. Diese enthält ein Grundöl und einen synthetischen Komplexester, wobei der Komplexester eine kinematische Viskosität bei 40°C von größer als 400 und bis zu 50.000 mm²/s aufweist und durch Umsetzung von Polyolen und Monocarbonsäuren und Dicarbonsäuren oder von Polyolen und Monoalkoholen und Dicarbonsäuren oder von Polyolen und Monoalkoholen und Monocarbonsäuren und Dicarbonsäuren erhalten wird. Bei den Monocarbonsäuren handelt es sich um verzweigte Monocarbonsäuren oder Mischungen von linearen und verzweigten C₄-C₄₀-Monocarbonsäuren, bei den Polyolen um verzweigte oder lineare Alkohole der allgemeinen Formel (I) R¹(OH)ₙ in der R¹ eine aliphatische oder cycloaliphatische Gruppe mit 2 bis 20 Kohlenstoffatomen ist und n mindestens 2 ist. Die Monoalkohole stellen verzweigte oder lineare Alkohole der allgemeinen Formel (II) (R²OH) dar, in der R² eine aliphatische oder cycloaliphatische Gruppe mit 2 bis 20 Kohlenstoffatomen ist. Die Dicarbonsäuren wurden aus der Gruppe, bestehend aus Oxal-, Malon-, Bernstein-, Glutar-, Adipin-, Pimelin-, Kork-, Azealin-, Sebacin-, Brassyl-, Thapsis-, und Phellogensäure, ausgewählt.

Bereits auf dem Markt befinden sich u. a. Komplexester von der Firma Cognis. Diese werden z.B. unter den Markennamen Synative ES TMP/140, Synative ES TMP/320 und Synative ES TMP/1000 vertrieben. Vor dem Hintergrund der oben beschriebenen Anforderungen an die physikalischen Eigenschaften von Schmierstoffen, sollten Komplexester eine möglichst gute Kältestabilität und gute Schmierfähigkeiten und Verschleißschutzeigenschaften aufweisen. Die hier erwähnten Produkte weisen jedoch Stockpunkte von lediglich -20 bis -25°C auf.

WO-A-2005019395 offenbart eine biologisch abbaubare Schmierstoffzusammensetzung, die einen Komplexpolyolester enthält, der einen polyfunktionellen Alkoholrest und einen gesättigten oder ungesättigten Dicarboxylsäurerest mit etwa 9 bis etwa 22 Kohlenstoffatomen aufweist.

Aufgabe der vorliegenden Erfindung ist es, einen mehrdimensionalen Polyester zur Verfügung zu stellen, der als Basisöl für Schmierstoffe verwendet werden kann und zu mindestens 50% aus nachwachsenden Rohstoffen besteht, biologisch abbaubar und umweltverträglich ist, und sich gleichzeitig durch hohe Viskositätswerte, eine hohe Kältestabilität, gekennzeichnet durch einen niedrigen Stockpunkt und eine hohe Langzeitkältestabilität, eine hohe Oxidationsstabilität, eine gute Schmierfähigkeit, und eine starke Verschleißschutzeigenschaft auszeichnet; sowie ein Verfahren für die Herstellung eines solchen mehrdimensionalen Polyesters bereitzustellen.

Diese Aufgabe wird gelöst durch einen mehrdimensionalen Polyester aus:
a) mindestens einem aliphatischen, linearen oder verzweigten, n-wertigen C₃₋₁₀-Alkohol, wobei n mindestens 3 ist, in einer Konzentration von 10 bis 25 Gew.%,
b) mindestens einer gesättigten oder ungesättigten, verzweigten, m-wertigen C₄₋₈-Carbonsäure oder deren Anhydrid, enthaltend eine gesättigte oder ungesättigte Seitenkette mit 8 bis 20 C-Atomen, wobei m mindestens 2 ist, in einer Konzentration von 5 bis 30 Gew.%,
c) mindestens einer einfach oder mehrfach ungesättigten, linearen C₁₆-C₂₂ Monocarbonsäure, in einer Konzentration von 50 bis 85 Gew.%.

Die Aufgabe wird auch gelöst durch ein Verfahren zum Herstellen eines erfindungsgemäßen Polyesters, umfassend die Umsetzung von
a) mindestens einem aliphatischen, linearen oder verzweigten, n-wertigen C₃₋₁₀-Alkohol, wobei n mindestens 3 ist,
b) mindestens einer gesättigten oder ungesättigten, verzweigten, m-wertigen C₄₋₈-Carbonsäure oder deren Anhydrid, enthaltend eine gesättigte oder ungesättigte Seitenkette mit 8 bis 20 C-Atomen, wobei m mindestens 2 ist,
c) mindestens einer einfach oder mehrfach ungesättigten, linearen C₁₆-C₂₂ Monocarbonsäure,
unter Verwendung eines Säurekatalysators und eines Antioxidans,
wobei der Polyester Komponente a) in einer Konzentration von 10 bis 25 Gew.%, Komponente b) in einer Konzentration von 5 bis 30 Gew.%, und Komponente c) in einer Konzentration von 50 bis 85 Gew.% enthält.

Die Aufgabe wird weiterhin gelöst durch die Verwendung eines erfindungsgemäßen Polyesters als Basisöl für Schmierstoffe.

Erfindungsgemäß besteht ein "Schmierstoff" aus einem Basisöl, sowie weiteren Inhaltsstoffen, welche man Additive nennt. Unter den Begriff "Schmierstoff" fallen Schmieröle, Schmierfette und Schmierpasten. Technisch bedeutende Schmieröle sind beispielsweise Hydrauliköle und Getriebeöle.

Der erfindungsgemäße mehrdimensionale Polyester weist eine mehrdimensionale Struktur auf, die insbesondere durch die Verwendung von Komponenten mit Seitenketten erreicht wird.

Der erfindungsgemäße mehrdimensionale Polyester ist erhältlich aus den Komponenten a), b) und c).

Die Komponente a) des erfindungsgemäßen Polyesters ist ein aliphatischer, linearer oder verzweigter, n-wertiger C₃-, C₄-, C₅-, C₆-, C₇-, C₈-, C₉- oder C₁₀-Alkohol, wobei n mindestens 3 ist. Unter den Begriff "aliphatisch" fallen dabei azyklische oder zyklische, gesättigte oder ungesättigte Alkohole.

In einer bevorzugten Ausführungsform in Verbindung mit einer der oben oder unten genannten Ausführungsformen enthält der Alkohol 3 bis 8 C-Atome, d.h. 3, 4, 5, 6, 7 oder 8 C-Atome, besonders bevorzugt 3 bis 6 C-Atome, d.h. 3, 4, 5 oder 6 C-Atome.

In einer bevorzugten Ausführungsform in Verbindung mit einer der oben oder unten genannten Ausführungsformen ist n eine Zahl von 3 bis 6, d.h. 3, 4, 5 oder 6.

In einer bevorzugten Ausführungsform in Verbindung mit einer der oben oder unten genannten Ausführungsformen ist der Alkohol verzweigt.

Die Komponente b) des erfindungsgemäßen Polyesters ist eine gesättigte oder ungesättigte, verzweigte m-wertige C₄-, C₅-, C₆-, C₇- oder C₈-Carbonsäure oder deren Anhydrid, enthaltend eine gesättigte oder ungesättigte Seitenkette mit 8, 9, 10, 11, 12, 13, 14, 15, 16, 17, 18, 19 oder 20 C-Atomen, wobei m mindestens 2 ist.

In einer bevorzugten Ausführungsform in Verbindung mit einer der oben oder unten genannten Ausführungsformen enthält die Carbonsäure bzw. deren Anhydrid 4 bis 6 C-Atome, d.h. 4, 5 oder 6 C-Atome, besonders bevorzugt 4 C-Atome.

In einer bevorzugten Ausführungsform in Verbindung mit einer der oben oder unten genannten Ausführungsformen enthält die Seitenkette 8 bis 12 C-Atome, d.h. 8, 9, 10, 11 oder 12 C-Atome. In einer weiteren bevorzugten Ausführungsform handelt es sich um eine ungesättigte Seitenkette. Besonders bevorzugt sind Alkenyl-Seitenketten.

Diese Seitenketten sind für die besonderen anwendungstechnischen Eigenschaften der erfindungsgemäßen Polyesters entscheidend und sind strukturell für dessen Mehrdimensionalität maßgeblich verantwortlich.

In einer bevorzugten Ausführungsform in Verbindung mit einer der oben oder unten genannten Ausführungsformen ist m eine Zahl von 2 bis 4, d.h. 2, 3 oder 4, besonders bevorzugt ist m 2.

Die Komponente c) des erfindungsgemäßen Polyesters ist eine einfach oder mehrfach ungesättigte, lineare C₁₆-, C₁₇-, C₁₈-, C₁₉-, C₂₀-, C₂₁- oder C₂₂-Monocarbonsäure.

In einer bevorzugten Ausführungsform in Verbindung mit einer der oben oder unten genannten Ausführungsformen ist die Monocarbonsäure einfach ungesättigt.

Einfach ungesättigte Monocarbonsäuren sind weniger oxidationsempfindlich und neigen weniger stark zum Verharzen als mehrfach ungesättigte Monocarbonsäuren, wie beispielsweise Linol- oder Linolensäuren, wie sie bevorzugt in Rapsölen, Sojaölen oder ähnlichen natürlichen Fetten vorkommen.

In einer bevorzugten Ausführungsform in Verbindung mit einer der oben oder unten genannten Ausführungsformen ist die Monocarbonsäure einfach ungesättigt und enthält 16 bis 22 C-Atome, d.h. 16, 17, 18, 19, 20, 21 oder 22 C-Atome. Besonders bevorzugt sind Monocarbonsäuren, ausgewählt aus der Gruppe, bestehend aus Palmitoleinsäure, Ölsäure, Elaidinsäure, Icosensäure, Cetoleinsäure und Erucasäure. Insbesondere bevorzugt ist Ölsäure, auch bezeichnet als (Z)-9-Octadecensäure. Ölsäure kommt als Bestandteil der entsprechenden Triglyceride in fast allen natürlichen Fetten vor. Beispielsweise ist sie aus High-Oleic-Sonnenblumenöl zu gewinnen, in dem sie zu 80 bis 93 Gew.% neben geringen Mengen anderer, auch mehrfach ungesättigter und gesättigter Fettsäuren enthalten ist.

In einer bevorzugten Ausführungsform in Verbindung mit einer der oben oder unten genannten Ausführungsformen, wird dem erfindungsgemäßen Polyester bei der Herstellung vor Reaktionsende mindestens ein einwertiger, aliphatischer, linearer oder verzweigter C₆-, C₇-, C₈-, C₉-, C₁₀-, C₁₁-, C₁₂-, C₁₃-, C₁₄-, C₁₅-, C₁₆-, C₁₇-, C₁₈-, C₁₉ oder C₂₀-Alkohol als Komponente d) zugesetzt. Unter den Begriff "aliphatisch" fallen dabei azyklische oder zyklische, gesättigte oder ungesättigte Alkohole. Besonders bevorzugt sind Alkohole mit 8 bis 18 C-Atomen, d.h. 8, 9, 10, 11, 12, 13, 14, 15, 16, 17 oder 18 C-Atomen, insbesondere bevorzugt sind Alkohole, die eine gesättigte oder ungesättigte Seitenkette mit 2 bis 10 C-Atomen, d.h. mit 2, 3, 4, 5, 6, 7, 8, 9 oder 10 C-Atomen, enthalten. Als Beispiel für einen geeigneten erfindungsgemäßen Alkohol ist 2-Hexyl-1-decanol zu nennen.

In einer weiteren bevorzugten Ausführungsform in Verbindung mit einer der oben oder unten genannten Ausführungsformen ist die Komponente a) des erfindungsgemäßen Polyesters Trimethylolpropan, Di-Trimethylolpropan, Pentaerythrit, Di-Pentaerythrit, Sorbitol, Sorbitan, Mannitol, Glycerin und/oder Polyvinylalkohol. Besonders bevorzugt sind Trimethylolpropan und Pentaerythrit. Insbesondere bevorzugt ist Trimethylolpropan.

In einer bevorzugten Ausführungsform in Verbindung mit einer der oben oder unten genannten Ausführungsformen ist die Komponente b) des erfindungsgemäßen Polyesters eine Carbonsäure, ausgewählt aus der Gruppe, bestehend aus Alkenylbernsteinsäure, Alkenylglutarsäure und Alkenyladepinsäure, bzw. ein Carbonsäureanhydrid, ausgewählt aus der Gruppe, bestehend aus Alkenylbersteinsäureanhydrid, Alkenylglutarsäureanhydrid und Alkenyladepinsäureanhydrid.

In einer weiteren bevorzugten Ausführungsform in Verbindung mit einer der oben oder unten genannten Ausführungsformen ist die Komponente b) des erfindungsgemäßen Polyesters eine Dicarbonsäure oder deren Anhydrid mit einer Seitenkette von 8 bis 12 C-Atomen, d.h. 8, 9, 10, 11 oder 12 C-Atomen.

In einer weiteren bevorzugten Ausführungsform in Verbindung mit einer der oben oder unten genannten Ausführungsformen enthält die Komponente b) des erfindungsgemäßen Polyesters eine C₈₋₁₄-Alkenyl-Seitenkette, d.h. eine C₈-, C₉-, C₁₀-, C₁₁-, C₁₂-, C₁₃- oder C₁₄-Alkenyl-Seitenkette.

In einer weiteren bevorzugten Ausführungsform in Verbindung mit einer der oben oder unten genannten Ausführungsformen ist die Komponente b) des erfindungsgemäßen Polyesters Alkenylbernsteinsäure oder deren Anhydrid. Besonders bevorzugt sind Octenylbernsteinsäure bzw. Octenylbernsteinsäureanhydrid. Insbesondere bevorzugt ist Octenylbernsteinsäure.

In einer weiteren bevorzugten Ausführungsform in Verbindung mit einer der oben oder unten genannten Ausführungsformen ist die Komponente c) Ölsäure mit einem Ölsäuregehalt von mindestens 90 Gew.%.

In einer weiteren bevorzugten Ausführungsform in Verbindung mit einer der oben oder unten genannten Ausführungsformen liegt die Komponente a) in dem erfindungsgemäßen Polyester in einer Konzentration von 12 bis 20 Gew.-% und besonders bevorzugt 17 bis 19 Gew.-% vor.

In einer weiteren bevorzugten Ausführungsform in Verbindung mit einer der oben oder unten genannten Ausführungsformen liegt die Komponente b) in dem erfindungsgemäßen Polyester in einer Konzentration von 10 bis 25 Gew.-% und besonders bevorzugt 20 bis 24 Gew.-% vor.

In einer weiteren bevorzugten Ausführungsform in Verbindung mit einer der oben oder unten genannten Ausführungsformen liegt die Komponente c) in dem erfindungsgemäßen Polyester in einer Konzentration von 55 bis 70 Gew.-% und besonders bevorzugt 57 bis 62 Gew.-% vor.

In einer weiteren bevorzugten Ausführungsform in Verbindung mit einer der oben oder unten genannten Ausführungsformen liegt die Komponente d) in dem erfindungsgemäßen Polyester in einer Konzentration von 0 bis 5 Gew.-%, besonders bevorzugt 1 bis 5 Gew.-% und insbesondere bevorzugt 3 bis 4 Gew.-% vor.

Die Herstellung des erfindungsgemäßen Polyesters erfolgt durch Umsetzung der Komponenten a), b) und c) unter Verwendung eines Säurekatalysators und eines Antioxidans.

In einer weiteren bevorzugten Ausführungsform in Verbindung mit einer der oben oder unten genannten Ausführungsformen ist der Säurekatalysator Methansulfonsäure.

In einer weiteren bevorzugten Ausführungsform in Verbindung mit einer der oben oder unten genannten Ausführungsformen ist das Antioxidans Phosphinsäure oder ein Derivat der Phosphinsäure.

Der erfindungsgemäße Polyester ist geeignet zur Verwendung als Basisöl für Schmierstoffe. Besonders bevorzugt ist die Verwendung als Basisöl für Schmieröle, insbesondere Hydrauliköle und Getriebeöle.

Von besonderem Interesse sind erfindungsgemäße Polyester mit Viskositäten von 200 bis 350 mm²/s bei 40°C, weil sie sich für den Einsatz in Fahrzeug-, Industrie- und Windradgetrieben bzw. als Kupplungsöle für Fahrzeuge eigenen. Die erfindungsgemäßen mehrdimensionalen Polyester weisen außerdem eine hervorragende Kältestabilität mit einem Stockpunkt von >-50°C und einer Langzeitkältestabilität von über 7 Tagen bei >-50°C auf. Zudem weisen sie eine besonders hohe Oxidationsstabilität, eine gute Schmierfähigkeit und gute Verschleißschutzeigenschaften auf.

Die folgenden Beispiele erläutern die Erfindung.

### Beispiele

Im folgenden werden zunächst die Messbedingungen für die physikalischen und chemischen Eigenschaften der erfindungsgemäßen Polyester erläutert.

Die Viskosität der Polyester wird nach DIN ISO 51562 bestimmt.

Der Stockpunkt wird nach DIN ISO 3016 und die Langzeitkältestabilität bzw. das Fließvermögen nach 7 Tagen bei niedriger Temperatur nach ASTM D 2532 bestimmt.

Zur Bestimmung der Oxidationsstabilität werden Proben der Polyester als dünner Film über 8 Stunden einer Temperatur von 180°C ausgesetzt. Anschließend wird von den Ölen nach DIN ISO 51562 die Viskosität bestimmt und daraus der Viskositätsanstieg ermittelt.

Zur Überprüfung der Schmierfähigkeit und der Verschleißschutzeigenschaften werden Tests mit dem Shell-Vier-Kugelapparat nach ISO DIN 51350 sowohl bei 300N als auch bei 460N durchgeführt. Zur Beurteilung der Schmierfähigkeit werden die Abnutzung an den Reibeflächen bzw. der Kalottendurchmesser, entstanden durch die Reibung bestimm. Je geringer der Durchmesser der Kalotten, desto besser ist die Schmierfähigkeit des getesteten Öls.

### Beispiel 1

Herstellung eines erfindungsgemäßen Polyesters (1) aus mindestens 50% nachwachsenden Rohstoffen:

Eine Mischung aus Trimethylolpropan (TMP) (1.0 eq), Octenylbernsteinsäureanhydrid (n-OSA) (0.7 eq) und Ölsäure (1.6 eq) wurde auf 80°C erhitzt und mit einer Mischung aus Methansulfonsäure (0.4 Gew.% bezogen auf die Ansatzgröße) und Phosphinsäure (0.2 Gew.% bezogen auf die Ansatzgröße) versetzt. Die Reaktionsmischung wurde unter vermindertem Druck auf 140°C erhitzt, bis die Säurezahl auf 10 gefallen war. Zur Bestimmung der Säurezahl wurde der Katalysator mittels Natriumhydrogencarbonat neutralisiert, filtriert und die Probe nach DIN ISO 2114 titriert. Danach erfolgte die Zugabe einer der Säurezahl entsprechenden stöchiometrischen Menge an 2-Hexyl-1-decanol. Die Reaktionsmischung wurde weiter so lange erhitzt, bis die Säurezahl unter 2 gefallen war. Nach Neutralisation der Katalysatoren mittels Kaliumcarbonat und Filtration wurde das fertige Produkt als hellgelbes Öl mit einer Säurezahl unter 1 erhalten, welches eine Viskosität von 223 mm²/s bei 40°C und einem Viskositästindex von 156 aufwies. Dieses Öl wies eine Kältestabilität bei -31 °C von über 7 Tagen und einen Pourpoint von -50°C auf.

### Beispiel 2

Herstellung eines erfindungsgemäßen Polyesters (2) aus mindestens 50% nachwachsenden Rohstoffen:

Eine Mischung aus Trimethylolpropan (TMP) (1.0 eq), Octenylbernsteinsäureanhydrid (n-OSH) (0.8 eq) und Ölsäure (1.4 eq) wurde auf 80°C erhitzt und mit einer Mischung aus Methansulfonsäure (0.4 Gew.% bezogen auf die Ansatzgröße) und Phosphinsäure (0.2 Gew.% bezogen auf die Ansatzgröße) versetzt. Die Reaktionsmischung wurde unter vermindertem Druck auf 140°C erhitzt, bis die Säurezahl auf 10 gefallen war. Zur Bestimmung der Säurezahl wurde der Katalysator mittels Natriumhydrogencarbonat neutralisiert, filtriert und die Probe nach DIN ISO 2114 titriert. Danach erfolgte die Zugabe einer der Säurezahl entsprechenden stöchiometrischen Menge an 2-Hexyl-1-decanol. Die Reaktionsmischung wurde weiter so lange erhitzt, bis die Säurezahl unter 2 gefallen war. Nach Neutralisation der Katalysatoren und Filtration wurde das fertige Produkt als hellgelbes Öl mit einer Säurezahl von unter 1 erhalten, welches eine Viskosität von 318mm²/s bei 40°C und einen Viskositäsindex von 153 aufwies. Dieses Öl wies eine Kältestabilität bei -31 °C von über 7 Tagen und einen Pourpoint von >-50°C auf. Bei der Bestimmung der Oxidationsstabilität wurde ein Viskositätsanstieg von 130% der additivierten Proben gemessen. Das zum Vergleich getestete Synative ES TMP/05 320 der Firma Cognis dagegen ergab mit der gleichen Additivmischung eine Viskositätserhöhung von 180%. Als Verschleißkennwert wurde bei 300N ein Kalottendurchmesser von 0,31mm und bei 460N wurde einen Kalottendurchmesser von 1,1 mm ermittelt.

### Beispiel 3

Eine Mischung aus Trimethylolpropan (TMP) (1.0 eq), Tetrapropenylbernsteinsäureanhydrid (TPSA) (0.8 eq) und Ölsäure (1.4 eq) wurde auf 80°C erhitzt und mit einer Mischung aus Methansulfonsäure (0.4 Gew.% bezogen auf die Ansatzgröße) und Phosphinsäure (0.2 Gew.% bezogen auf die Ansatzgröße) versetzt. Die Reaktionsmischung wurde unter vermindertem Druck auf 140°C erhitzt, bis die Säurezahl auf 10 gefallen war. Zur Bestimmung der Säurezahl wurde der Katalysator mittels Natriumhydrogencarbonat neutralisiert, filtriert und die Probe nach DIN ISO 2114 titriert. Danach erfolgte die Zugabe einer der Säurezahl entsprechenden stöchiometrischen Menge an 2-Hexyl-1-decanol. Die Reaktionsmischung wurde weiter so lange erhitzt, bis die Säurezahl unter 2 gefallen war. Nach Neutralisation der Katalysatoren und Filtration wurde das fertige Produkt als hellgelbes Öl mit einer Säurezahl unter 1 erhalten, welches eine Viskosität von 397mm²/s bei 40°C und einem Viskositätsindex von 98 aufwies. Dieses Öl wies eine Kältestabilität bei -31°C von über 7 Tagen und einen Pourpoint von >-50°C auf.

## Patentansprüche

1. Mehrdimensionaler Polyester aus
a) mindestens einem aliphatischen, linearen oder verzweigten, n-wertigen C₃₋₁₀-Alkohol, wobei n mindestens 3 ist, in einer Konzentration von 10 bis 25 Gew.%,
b) mindestens einer gesättigten oder ungesättigten, verzweigten, m-wertigen C₄₋₈-Carbonsäure oder deren Anhydrid, enthaltend eine gesättigte oder ungesättigte Seitenkette mit 8 bis 20 C-Atomen, wobei m mindestens 2 ist, in einer Konzentration von 5 bis 30 Gew.%,
c) mindestens einer einfach oder mehrfach ungesättigten, linearen C₁₆-C₂₂ Monocarbonsäure, in einer Konzentration von 50 bis 85 Gew.%.

2. Polyester nach Anspruch 1, wobei die Komponente a), Trimethylolpropan, Di-Trimethylolpropan, Pentaerythrit, Di-Pentaerythrit, Sorbitol, Sorbitan, Mannitol, Glycerin und/oder Polyvinylalkohol ist.

3. Polyester nach einem der Ansprüche 1 oder 2, wobei die Komponente b) eine Dicarbonsäure oder deren Anhydrid mit einer Seitenkette von 8 bis 12 C-Atomen ist.

4. Polyester nach einem der Ansprüche 1 bis 3, wobei die Komponente b) eine C₈₋₁₄-Alkenyl-Seitenkette enthält.

5. Polyester nach einem der Ansprüche 1 bis 4, wobei die Komponente b) Alkenylbernsteinsäure oder deren Anhydrid ist.

6. Polyester nach einem der Ansprüche 1 bis 5, wobei die Komponente c) Ölsäure mit einem Ölsäuregehalt von mindestens 90 Gew.% ist.

7. Polyester nach einem der Ansprüche 1 bis 6, wobei als Komponente d) ein einwertiger, aliphatischer, linearer oder verzweigter C₆-C₂₀-Alkohol eingesetzt wird.

8. Polyester nach Anspruch 7, wobei die Komponente d) in einer Konzentration von 0 bis 5 Gew.% vorliegt.

9. Verfahren zum Herstellen eines Polyesters nach mindestens einem der Ansprüche 1 bis 8, umfassend die Umsetzung von
a) mindestens einem aliphatischen, linearen oder verzweigten, n-wertigen C₃₋₁₀-Alkohol, wobei n mindestens 3 ist,
b) mindestens einer gesättigten oder ungesättigten, verzweigten, m-wertigen C₄₋₈-Carbonsäure oder deren Anhydrid, enthaltend eine gesättigte oder ungesättigte Seitenkette mit 8 bis 20 C-Atomen, wobei m mindestens 2 ist,
c) mindestens einer einfach oder mehrfach ungesättigten, linearen C₁₆-C₂₂ Monocarbonsäure,
unter Verwendung eines Säurekatalysators und eines Antioxidans,
wobei der Polyester Komponente a) in einer Konzentration von 10 bis 25 Gew.%, Komponente b) in einer Konzentration von 5 bis 30 Gew.%, und Komponente c) in einer Konzentration von 50 bis 85 Gew.% enthält.

10. Verfahren nach Anspruch 9, wobei der Säurekatalysator Methansulfonsäure ist.

11. Verfahren nach einem der Ansprüche 9 und 10, wobei das Antioxidans Phosphinsäure oder ein Derivat der Phosphinsäure ist.

12. Verwendung eines Polyesters nach mindestens einem der Ansprüche 1 bis 8 als Basisöl für Schmierstoffe.

## Claims

1. Multi-dimensional polyester consisting of
a) at least one aliphatic, linear or branched, n-valent C₃₋₁₀ alcohol, wherein n is at least 3, in a concentration of from 10 to 25 wt.%,
b) at least one saturated or unsaturated, branched, m-valent C₄₋₈ carboxylic acid or the anhydride thereof, containing a saturated or unsaturated side chain having from 8 to 20 C atoms, wherein m is at least 2, in a concentration of from 5 to 30 wt.%,
c) at least one monounsaturated or polyunsaturated linear C₁₆-C₂₂ monocarboxylic acid, in a concentration of from 50 to 85 wt.%.

2. Polyester according to claim 1, wherein component a) is trimethylolpropane, ditrimethylolpropane, pentaerythritol, di-pentaerythritol, sorbitol, sorbitan, mannitol, glycerine and/or polyvinyl alcohol.

3. Polyester according to either claim 1 or claim 2, wherein component b) is a dicarboxylic acid or the anhydride thereof comprising a side chain having from 8 to 12 C atoms.

4. Polyester according to any of claims 1 to 3, wherein component b) contains a C₈₋₁₄ alkenyl side chain.

5. Polyester according to any of claims 1 to 4, wherein component b) is an alkenyl succinic acid or the anhydride thereof.

6. Polyester according to any of claims 1 to 5, wherein component c) is oleic acid having an oleic acid percentage of at least 90 wt.%.

7. Polyester according to any of claims 1 to 6, wherein a monovalent, aliphatic, linear or branched C₅-C₂₀ alcohol is used as component d).

8. Polyester according to claim 7, wherein component d) is present in a concentration of from 0 to 5 wt.%.

9. Method for producing a polyester according to at least one of claims 1 to 8, comprising reacting
a) at least one aliphatic, linear or branched, n-valent C₃₋₁₀ alcohol, wherein n is at least 3,
b) at least one saturated or unsaturated, branched, m-valent C₄₋₈ carboxylic acid or the anhydride thereof, containing a saturated or unsaturated side chain having from 8 to 20 C atoms, wherein m is at least 2,
c) at least one monounsaturated or polyunsaturated, linear C₁₆-C-₂₂ monocarboxylic acid, using an acid catalyst and an antioxidant,
wherein the polyester contains component a) in a concentration of from 10 to 25 wt.%, component b) in a concentration of from 5 to 30 wt.%, and component c) in a concentration of from 50 to 85 wt.%.

10. Method according to claim 9, wherein the acid catalyst is methanesulfonic acid.

11. Method according to any of claims 9 and 10, wherein the antioxidant is phosphinic acid or a derivative of phosphinic acid.

12. Use of a polyester according to at least one of claims 1 to 8 as a base oil for lubricants.

## Revendications

1. Polyester multidimensionnel constitué
a) d'au moins un alcool C₃₋₁₀ n-valent, aliphatique, linéaire ou ramifié, n étant au moins égal à 3, dans une concentration de 10 à 25% en poids,
b) d'au moins un acide carboxylique C₄₋₈ m-valent ou son anhydride, ramifié, saturé ou insaturé, contenant une chaîne latérale saturée ou insaturée avec 8 à 20 atomes de carbone C, m étant au moins égal à 2, dans une concentration de 5 à 30% en poids,
c) d'au moins un acide mono-carboxylique C₁₆-C₂₂ linéaire, insaturé simple ou multiple, dans une concentration de 50 à 85% en poids.

2. Polyester selon la revendication 1, dans lequel le composant a) est du triméthylopropane, di-triméthylopropane, pentaérythritol, di- pentaérythritol, sorbitol, sorbitane, mannitol, de la glycérine et/ou de l'alcool polyvinylique.

3. Polyester selon l'une des revendications 1 ou 2, dans lequel le composant b) est un acide dicarboxylique ou son anhydride avec une chaîne latérale de 8 à 12 atomes de carbone C.

4. Polyester selon l'une des revendications 1 à 3, dans lequel le composant b) renferme une chaîne latérale C₈₋₁₄ alkényle.

5. Polyester selon l'une des revendications 1 à 4, dans lequel le composant b) est un acide succinique d'alkényle ou son anhydride.

6. Polyester selon l'une des revendications 1 à 5, dans lequel le composant c) est un acide oléique avec une teneur d'acide oléique d'au moins 90% en poids.

7. Polyester selon l'une des revendications 1 à 6, dans lequel en met en oeuvre en guise de composant d), un alcool C₆-C₂₀ monovalent, aliphatique, linéaire ou ramifié.

8. Polyester selon la revendication 7, dans lequel le composant d) est présent à une concentration de 0 à 5% en poids.

9. Procédé de fabrication d'un polyester selon l'une au moins des revendications 1 à 8, comprenant la transformation
a) d'au moins un alcool C₃₋₁₀ n-valent, aliphatique, linéaire ou ramifié, n étant au moins égal à 3,
b) d'au moins un acide carboxylique C₄₋₈ m-valent ou son anhydride, ramifié, saturé ou insaturé, contenant une chaîne latérale saturée ou insaturée avec 8 à 20 atomes de carbone C, m étant au moins égal à 2,
c) au moins un acide mono-carboxylique C₁₆-C₂₂ linéaire, insaturé simple ou multiple,
en utilisant un catalyseur acide et un antioxydant,
le polyester renfermant le composant a) dans une concentration de 10 à 25% en poids, le composant b dans une concentration de 5 à 30% en poids, et le composant c) dans une concentration de 50 à 85% en poids.

10. Procédé selon la revendication 9, d'après lequel le catalyseur acide est de l'acide méthane-sulfonique.

11. Procédé selon l'une des revendications 9 et 10, d'après lequel l'antioxydant est de l'acide phosphinique ou un dérivé de l'acide phosphinique.

12. Utilisation d'un polyester selon l'une au moins des revendications 1 à 8 en guise d'huile de base pour des lubrifiants.
